# EUROPÄISCHE PATENTSCHRIFT

(11) **EP 1 936 017 B1**
(45) Veröffentlichungstag und Bekanntmachung des Hinweises auf die Patenterteilung: **21.08.2013**
(21) Anmeldenummer: 06026730.9
(22) Anmeldetag: 22.12.2006
(51) Int. Cl.: D01F 2/00, D04H 3/015, D01D 5/098, D04H 3/16

(54) **Verfahren und Vorrichtung zur Herstellung eines Spinnvlieses aus cellulosischen Filamenten**
Method and device for manufacturing a spunbonding fabric made of cellulose filaments
Procédé et dispositif destinés à la fabrication d'un filé-lié constitué de filaments cellulosiques

(43) Veröffentlichungstag der Anmeldung: 25.06.2008
(73) Patentinhaber: Reifenhäuser GmbH & Co. KG Maschinenfabrik, 53839 Troisdorf (DE)
(72) Erfinder: Geus, Hans-Georg, 53859 Niederkassel (DE); Klünter, Hans-Bernd, 53844 Troisdorf (DE)
(74) Vertreter: Rohmann, Michael

(56) Entgegenhaltungen:
- EP-A- 1 340 843
- WO-A-96/21758

## Beschreibung

Die Erfindung betrifft ein Verfahren zur Herstellung eines Spinnvlieses aus cellulosischen Filamenten bzw. Fasern, wobei die Filamente aus einer Cellulose-Lösung mittels einer Spinnerette ersponnen werden. Die Erfindung betrifft fernerhin eine Vorrichtung zur Durchführung des erfindungsgemäßen Verfahrens. - Cellulosische Filamente meint also Filamente, die aus einer Cellulose-Lösung ersponnen werden und die folglich cellulosehaltig sind.

Aus der Praxis sind Verfahren zur Herstellung kardierter Vliese aus cellulosischen Filamenten bekannt. Diese Vliese aus cellulosischen Filamenten haben gegenüber Spinnvliesen aus Kunststofffilamenten den Vorteil, dass sie relativ leicht biologisch abbaubar sind. Außerdem sind Vliese aus cellulosischen Filamenten aufgrund ihrer verhältnismäßig hohen Saugfähigkeit in Hygieneprodukten vorteilhaft einsetzbar. Für viele Anwendungen sind diese Vliese aus cellulosischen Fasern aber nicht geeignet, da sie nur unzureichende Festigkeitseigenschaften aufweisen. Zur Verbesserung der Festigkeit werden diese Vliese mit Polymeren versetzt. Das hat jedoch den Nachteil, dass wiederum der biologische Abbau dieser Vliese verzögert bzw. verhindert wird.

Demgegenüber liegt der Erfindung das technische Problem zugrunde, ein Verfahren der eingangs genannten Art anzugeben, mit dem Spinnvliese aus cellulosischen Filamenten herstellbar sind, die biologisch leicht abbaubar sind, die eine hohe Saugfähigkeit aufweisen und die nichtsdestoweniger optimale Festigkeitseigenschaften zeigen. Weiterhin liegt der Erfindung das technische Problem zugrunde, eine Vorrichtung zur Durchführung des erfindungsgemäßen Verfahrens anzugeben.

Zur Lösung dieses technischen Problems lehrt die Erfindung ein Verfahren zur Herstellung eines Spinnvlieses aus cellulosischen Filamenten bzw. Fasern,
wobei die Filamente aus einer Cellulose-Lösung mittels einer Spinnerette ersponnen werden,
wobei die cellulosischen Filamente nach dem Austritt aus der Spinnerette anschließend in eine Kühlkammer aus zumindest zwei Kühlabschnitten eingeführt werden
und wobei die Filamente in den beiden Kühlabschnitten jeweils mit Prozessluft bzw. Kühlluft unterschiedlicher Menge und/oder unterschiedlicher Temperatur und/oder unterschiedlicher Luftfeuchtigkeit in Kontakt gebracht werden. - Menge der Prozessluft bzw. Kühlluft meint insbesondere den Volumenstrom der eintretenden Luft.

Es liegt im Rahmen der Erfindung, dass die zumindest zwei Kühlabschnitte in Bewegungsrichtung der Filamente hintereinander bzw. übereinander angeordnet sind. Mit dem Begriff erster Kühlabschnitt ist hier und nachfolgend der Kühlabschnitt der Kühlkammer gemeint, in den die Filamente zuerst eintreten. Dementsprechend ist mit dem Begriff zweiter Kühlabschnitt der Kühlabschnitt gemeint, in den die Filamente nach dem ersten Kühlabschnitt eintreten. Zweckmäßigerweise ist der erste Kühlabschnitt über bzw. vertikal über dem zweiten Kühlabschnitt angeordnet. Es liegt im Rahmen der Erfindung, dass die Spinnerette über bzw. vertikal über dem ersten Kühlabschnitt angeordnet ist.

Nach besonders bevorzugter Ausführungsform der Erfindung werden die cellulosischen Filamente als Lyocell-Filamente ersponnen. Lyocell-Filamente meint dabei Filamente, die aus einer Lösung von Cellulose in einem Gemisch von Wasser und einer organischen Substanz ersponnen werden. Es liegt im Rahmen der Erfindung, dass als Cellulose-Lösung eine Lösung von Cellulose in einem Gemisch aus Wasser und einem tertiären Aminoxid eingesetzt wird. Bei dem tertiären Aminoxid handelt es sich dann um die oben genannte organische Substanz. Vorzugsweise wird als tertiäres Aminoxid N-Methylmorpholin-N-oxid (NMMO) eingesetzt.

Eine bevorzugte Ausführungsform der Erfindung ist dadurch gekennzeichnet, dass die Konzentration der Cellulose in der Cellulose-Lösung 0,5 bis 25 Gew.-%, vorzugsweise 1 bis 22 Gew.-% beträgt. Bevorzugt beträgt die Konzentration der Cellulose dabei 1,5 bis 21 Gew.-%, sehr bevorzugt 2 bis 20 Gew.-%.

Es liegt im Rahmen der Erfindung, dass die dem ersten Kühlabschnitt zugeführte Luftmenge geringer ist als die dem zweiten Kühlabschnitt zugeführte Luftmenge. - Gemäß einer empfohlenen Ausführungsform der Erfindung beträgt das Verhältnis der dem ersten Kühlabschnitt zugeführten Luftmenge zu der dem zweiten Kühlabschnitt zugeführten Luftmenge 1:10 bis 1:1, vorzugsweise 1,5:10 bis 6:10 und bevorzugt 1,5:10 bis 4,5:10.

Nach einer bevorzugten Ausführungsvariante des erfindungsgemäßen Verfahrens ist die Temperatur der in den ersten Kühlabschnitt eintretenden Kühlluft höher als die Temperatur der in den zweiten Kühlabschnitt eintretenden Kühlluft. Zweckmäßigerweise beträgt die Temperatur der dem ersten Kühlabschnitt zugeführten Kühlluft 18 bis 80 °C und die Temperatur der dem zweiten Kühlabschnitt zugeführten Kühlluft 18 bis 35 °C.

Gemäß einer Ausführungsform liegt die Luftfeuchtigkeit der in die beiden Kühlabschnitte eintretenden Kühlluft zwischen 60 und 100% relativer Feuchte. Die Luftfeuchtigkeit dieser in diesen Kühlabschnitten zugeführten Kühlluft entspricht jedoch mindestens der Feuchte, die aus der Umgebungsluft angesaugt wird. Es liegt auch im Rahmen der Erfindung, dass Nebel (relative Feuchte > 100 %) in den ersten Kühlabschnitt und/oder in den zweiten Kühlabschnitt eingeführt wird.

Es empfiehlt sich, dass die Filamente nach der Kühlung in der Kühlkammer aerodynamisch verstreckt werden und anschließend auf einer Ablagevorrichtung abgelegt werden. Die aerodynamische Verstreckung erfolgt zweckmäßigerweise in einer der Kühlkammer nachgeschalteten Verstreckeinheit. Die Ablage erfolgt vorzugsweise auf einem Ablagesiebband.

Eine besonders bevorzugte Ausführungsform der Erfindung ist dadurch gekennzeichnet, dass die Filamente vor der Ablage auf der Ablagevorrichtung mit der Maßgabe behandelt werden, dass zumindest teilweise eine Koagulation der Cellulose der Filamente stattfindet. Diese Behandlung der Filamente zur Erzeugung einer Koagulation wird vorzugsweise nach der aerodynamischen Verstreckung und vor der Ablage durchgeführt. Die Behandlung erfolgt zweckmäßigerweise mit einem wässrigen Medium, insbesondere mit Wasser und/oder Wasserdampf und/oder mit einer wässrigen Lösung und/oder mit einer wässrigen Mischung. Wässrige Lösung meint dabei vor allem die Lösung einer organischen Substanz in Wasser, vorzugsweise eine wässrige NMMO-Lösung. Vorzugsweise erfolgt die Behandlung mit dem wässrigen Medium als Sprühbehandlung, wobei zweckmäßigerweise entsprechende Sprühköpfe bzw. Wasserzerstäuber eingesetzt werden. Weiter unten wird noch näher erläutert, an welchen Stellen der erfindungsgemäßen Vorrichtung die vorstehend beschriebene Behandlung der Filamente vorzugsweise erfolgt.

Eine besonders bevorzugte Ausführungsform des erfindungsgemäßen Verfahrens ist dadurch gekennzeichnet, dass nach der Ablage der Filamente die gebildete Vliesbahn mit einem wässrigen Medium behandelt bzw. gewaschen wird und anschließend entwässert wird. Auch hier meint wässriges Medium insbesondere Wasser und/oder Wasserdampf und/oder eine wässrige Lösung und/oder eine wässrige Mischung. Vorzugsweise wird als wässriges Medium bzw. als Waschflüssigkeit Wasser oder eine wässrige NMMO-Lösung eingesetzt. - Es liegt im Rahmen der Erfindung, dass die Filamente auf einem luft- und wasserdurchlässigen Ablagesiebband zur Vliesbahn abgelegt werden und als Vliesbahn weitertransportiert werden. Die Vliesbahn wird dann auf dem Ablagesiebband oder auf einem dem Ablagesiebband nachgeschalteten Band bzw. Siebband mit dem wässrigen Medium behandelt/gewaschen. Es liegt im Rahmen der Erfindung, dass die Vliesbahn nach einer solchen Waschbehandlung entwässert wird. Die Entwässerung erfolgt zweckmäßigerweise als Vakuumbehandlung in einer Vakuumstation und/oder durch Quetschen der Vliesbahn in einem Quetschwerk. Nach empfohlener Ausführungsform wird die Vliesbahn wiederholt mit dem wässrigen Medium behandelt und jeweils anschließend entwässert. Gemäß einer bevorzugten Ausführungsvariante erfolgt die Behandlung mit dem wässrigen Medium und die anschließende Entwässerung mindestens dreimal. Nach der finalen Behandlung durch Waschen und Entwässern erfolgt empfohlenermaßen ein Trocknen der Vliesbahn und daraufhin zweckmäßigerweise ein Aufwickeln der Vliesbahn. Es liegt auch im Rahmen der Erfindung, dass die Vliesbahn vor ihrer Trocknung zur Einstellung bestimmter Vliesbahneigenschaften verfestigt wird und zwar nach einer bevorzugten Ausführungsvariante durch Wasserstrahlverfestigung. Außerdem können vor der Trocknung der Vliesbahn zur Erzeugung bestimmter Vlieseigenschaften auch Avivagen auf die Vliesbahn aufgebracht werden.

Zur Lösung des technischen Problems lehrt die Erfindung weiterhin eine Vorrichtung zur Durchführung des erfindungsgemäßen Verfahrens, mit einer Spinnerette, einer Kühlkammer, einer Verstreckeinheit und einer Ablagevorrichtung, wobei mit der Spinnerette Filamente aus einer Cellulose-Lösung erspinnbar sind, wobei die Kühlkammer in zumindest zwei Kühlabschnitte unterteilt ist, in denen die Filamente mit Prozess- bzw. Kühlluft unterschiedlicher Menge und/oder unterschiedlicher Temperatur und/oder unterschiedlicher Luftfeuchtigkeit beaufschlagbar sind. Es liegt im Rahmen der Erfindung, dass die Vorrichtung eine Cellulose-Lösung-Zuführungseinrichtung umfasst, mit der die Cellulose-Lösung der Spinnerette zugeführt wird.

Zweckmäßigerweise weist die Spinnerette eine Lochdichte von 0,5 bis 9 Loch/cm², vorzugsweise von 1 bis 8 Loch/cm² und bevorzugt von 1,5 bis 7,5 Loch/cm² auf. Sehr bevorzugt ist eine Lochdichte von 2 bis 5 Loch/cm² und besonders bevorzugt eine Lochdichte von 2,5 bis 4,5 Loch/cm², beispielsweise eine Lochdichte von 3,5 Loch/cm². Mit Loch ist eine Öffnung in der Spinnerette bzw. in der Düsenplatte der Spinnerette gemeint, durch die ein Filament austritt. Der Lochdurchmesser liegt zweckmäßigerweise bei 0,1 bis 1 mm. Nach einer Ausführungsvariante sind die Löcher bzw. die zugeordneten Bohrungen in der Düsenplatte gleichmäßig verteilt angeordnet. Gemäß einer anderen Ausführungsform können zur Gewährleistung bestimmter physikalischer Eigenschaften der Filamente die Bohrungen so verteilt sein, dass eine von der Mitte der Düsenplatte zu den Außenseiten ansteigende Lochdichte resultiert. Es ist aber auch möglich, dass die Lochdichte von der Mitte der Düsenplatte zu den Außenbereichen hin abfällt.

Es liegt im Rahmen der Erfindung, dass die Kühlkammer mit Abstand zu der Spinnerette bzw. zu der Düsenplatte der Spinnerette angeordnet ist. Vorzugsweise ist zwischen der Düsenplatte und der Kühlkammer eine Monomerabsaugungsvorrichtung angeordnet. Die Monomerabsaugungsvorrichtung saugt Luft aus dem Filamentbildungsraum direkt unterhalb der Düsenplatte ab. Dadurch werden die mit den Filamenten austretenden Gase, insbesondere Zersetzungsprodukte und dergleichen aus der Anlage entfernt. Hervorzuheben ist auch, dass mit der Monomerabsaugungsvorrichtung die Luftströmung unterhalb der Düsenplatte in vorteilhafter Weise kontrolliert werden kann.

Nach empfohlener Ausführungsform wird die Kühlkammer über einen Zwischenkanal mit einem Unterziehkanal verbunden, wobei dieser Unterziehkanal die Verstreckeinheit der Vorrichtung bildet. Eine ganz besonders bevorzugte Ausführungsform der Erfindung ist dadurch gekennzeichnet, dass die Verbindung bzw. der Übergangsbereich zwischen der Kühlkammer und dem Zwischenkanal nach außen geschlossen bzw. nach außen luftzuführungsfrei ausgebildet ist. Zweckmäßigerweise erfolgt im gesamten Bereich der Kühlkammer, des Zwischenkanals und des Unterziehkanals lediglich eine Zuführung der Prozess- bzw. Kühlluft in der Kühlkammer und ansonsten keine Luftzuführung von außen.

Zweckmäßigerweise läuft der Zwischenkanal vom Austritt der Kühlkammer zum Eintritt des Unterziehkanals im Vertikalschnitt keilförmig zusammen. Dabei liegt es im Rahmen der Erfindung, dass der Zwischenkanal zum Eintritt des Unterziehkanals im Vertikalschnitt auf die Eintrittsbreite des Unterziehkanals keilförmig zusammenläuft. Es empfiehlt sich, dass unterschiedliche Steigungswinkel dieses Zwischenkanals einstellbar sind. Vorzugsweise ist die Geometrie des Zwischenkanals mit der Maßgabe veränderbar, dass die Luftgeschwindigkeit erhöht werden kann. Auf diese Weise können unerwünschte, bei hohen Temperaturen auftretende Relaxationen der Filamente vermieden werden.

Es liegt im Rahmen der Erfindung, dass zwischen Verstreckeinheit (Unterziehkanal) und Ablagevorrichtung eine Verlegeeinheit mit zumindest einem Diffusor angeordnet ist. Nach besonders bevorzugter Ausführungsform der Erfindung besteht die Verlegeeinheit aus einem ersten Diffusor und einem daran anschließenden zweiten Diffusor. Dabei ist vorzugsweise zwischen dem ersten und dem zweiten Diffusor ein Umgebungslufteintrittsspalt vorgesehen. Gemäß sehr empfohlener Ausführungsvariante werden über diesen Umgebungslufteintrittsspalt die Filamente mit der Maßgabe behandelt, dass eine Koagulation der Cellulose stattfindet. Zweckmäßigerweise wird über den Umgebungslufteintrittsspalt ein wässriges Medium, vorzugsweise Wasser und/oder eine wässrige Lösung von NMMO eingedüst. Dabei empfiehlt es sich, dass im Bereich des Umgebungslufteintrittsspaltes Sprühköpfe angeordnet sind, über die das wässrige Medium in Richtung auf die Filamente eingedüst werden kann. Nach einer Ausführungsform der Erfindung wird wässriges Medium für die Koagulation über Öffnungen in der Diffusorwand bzw. in den Diffusorwänden eingebracht. Zweckmäßigerweise sind dann in die Diffusorwand bzw. in die Diffusorwände Sprühköpfe integriert, über die das wässrige Medium in Richtung auf die Filamente eingedüst werden kann. Diese Eindüsung durch Öffnungen in der Diffusorwand bzw. in den Diffusorwänden kann zusätzlich zu der Eindüsung über den Umgebungslufteintrittsspalt erfolgen.

Es liegt im Rahmen der Erfindung, dass die Ablagevorrichtung zumindest ein kontinuierlich bewegtes Ablagesiebband für die Spinnvliesbahn aufweist. Unter diesem Ablagesiebband ist zweckmäßigerweise zumindest eine Saugeinrichtung vorgesehen, mit der Luft durch das Ablagesiebband gesaugt wird. Zweckmäßigerweise handelt es sich bei der Saugeinrichtung um ein Sauggebläse, das steuer- und/oder regelbar ist.

Der Erfindung liegt die Erkenntnis zugrunde, dass mit dem erfindungsgemäßen Verfahren und mit der erfindungsgemäßen Vorrichtung Spinnvliese aus cellulosischen Filamenten hergestellt werden können, die sich durch optimale mechanische Eigenschaften, insbesondere durch sehr gute Festigkeitseigenschaften auszeichnen. Die erfindungsgemäß hergestellten Spinnvliese weisen eine relativ hohe Widerstandsfähigkeit gegen Abrasion und andere mechanische Beeinflussungen auf. Nichtsdestoweniger sind diese Spinnvliese aus cellulosischen Fasern verhältnismäßig einfach und mit geringem Aufwand erzeugbar. Die erfindungsgemäß hergestellten Vliese weisen eine hohe Saugfähigkeit auf und können insbesondere vorteilhaft in Hygieneprodukten eingesetzt werden. Fernerhin sind die erfindungsgemäß erzeugten Spinnvliese problemlos biologisch abbaubar, so dass sie insbesondere als Wegwerfartikel kompostierbar sind.

Es liegt im Rahmen der Erfindung, dass die Spinnvliese aus den cellulosischen Fasern nach dem Reicofil IV-Verfahren hergestellt werden. Dieses Reicofil IV-Verfahren wird in EP 1 340 843 A1 ausführlich beschrieben. Zweckmäßigerweise können alle dort beschriebenen Merkmale auch bei dem vorliegenden erfindungsgemäßen Verfahren bzw. bei der vorliegenden erfindungsgemäßen Vorrichtung eingesetzt werden. - Besondere Bedeutung kommt bei dem erfindungsgemäßen Verfahren zunächst der Aufteilung der Kühlkammer in zumindest zwei Kühlabschnitte zu. Fernerhin ist es sehr bevorzugt, dass Kühlkammer, Zwischenkanal und Verstreckeinheit als geschlossenes System ausgebildet sind, bei dem eine Luftzufuhr lediglich als Prozess- bzw. Kühlluftzufuhr in der Kühlkammer stattfindet und ansonsten vorzugsweise keine Luftzufuhr von außen stattfindet. Weiterhin besonders vorteilhaft ist im Rahmen der Erfindung die Aufteilung der Verlegeeinheit in zumindest zwei Diffusoren, wobei ein Umgebungslufteintrittsspalt vorgesehen ist, durch den zweckmäßigerweise ein wässriges Medium zur Koagulation der Cellulose eingedüst wird.

Nachfolgend wird die Erfindung anhand einer lediglich ein Ausführungsbeispiel darstellenden Zeichnung näher erläutert. Es zeigen in schematischer Darstellung:
- Fig. 1: einen Vertikalschnitt durch eine erfindungsgemäße Vorrichtung und
- Fig. 2: den vergrößerten Ausschnitt A aus dem Gegenstand der Fig. 1.

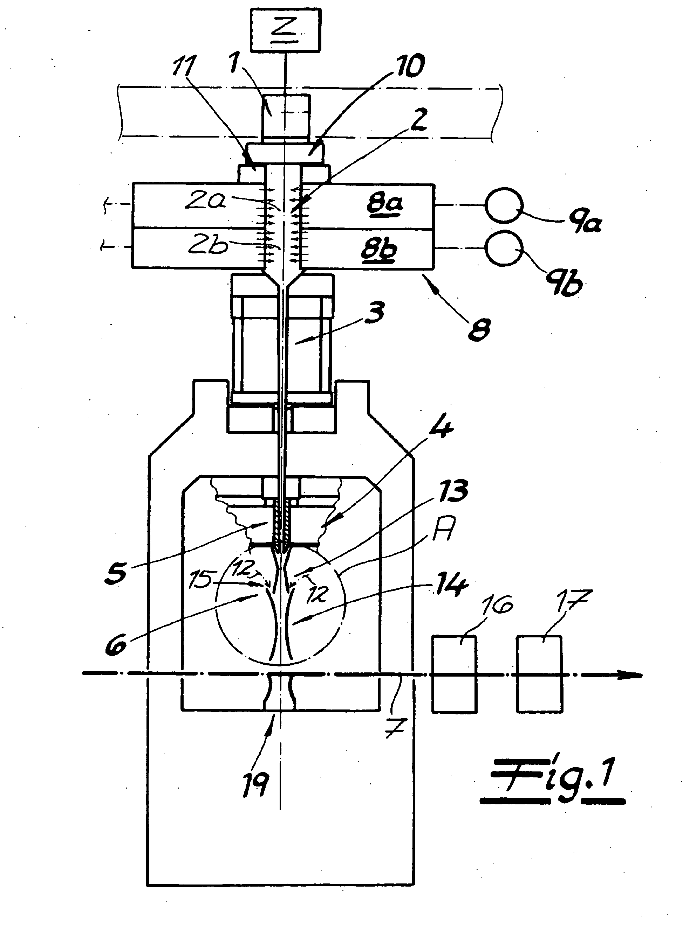

Die Figuren zeigen eine Vorrichtung zur Herstellung eines Spinnvlieses aus cellulosischen Filamenten. Die Filamente werden dabei aus einer Cellulose-Lösung mittels einer Spinnerette 1 ersponnen. Die Cellulose-Lösung wird dazu der Spinnerette 1 aus einer in Fig. 1 lediglich ganz schematisch dargestellten Cellulose-Lösung-Zuführungseinrichtung Z zugeführt. Die cellulosischen Filamente werden nach dem Austritt aus der Spinnerette 1 in eine Kühlkammer 2 eingeführt, in der die Filamente mit Prozess- bzw. Kühlluft in Kontakt kommen. An die Kühlkammer 2 schließt der Zwischenkanal 3 an und nach dem Zwischenkanal 3 folgt der Unterziehkanal 5 als Verstreckeinheit 4. An den Unterziehkanal 5 schließt die Verlegeeinheit 6 an und unterhalb der Verlegeeinheit 6 ist die Ablagevorrichtung in Form eines kontinuierlich bewegten Ablagesiebbandes 7 zur Ablage der Filamente zur Vliesbahn vorgesehen. In der Fig. 1 ist erkennbar, dass im Bereich der Kühlkammer 2 und des Zwischenkanals 3 sowie insbesondere im Übergangsbereich zwischen Kühlkammer 2 und Zwischenkanal 3 keine Luftzufuhr von außen vorgesehen ist, abgesehen von der Zufuhr der Prozess- bzw. Kühlluft zur Kühlung der Filamente in der Kühlkammer 2. Vorzugsweise findet im gesamten Aggregat aus Kühlkammer 2, Zwischenkanal 3 und Unterziehkanal 5 abgesehen von der genannten Zuführung der Prozess- bzw. Kühlluft keine weitere Luftzufuhr von außen statt. Insoweit handelt es sich um ein so genanntes geschlossenes System.

Die Filamente werden vorzugsweise und im Ausführungsbeispiel als Lyocell-Filamente ersponnen. Nach besonders bevorzugter Ausführungsform wird als Cellulose-Lösung eine Lösung von Cellulose in einem Gemisch aus Wasser und einem tertiären Aminoxid eingesetzt. Bei dem tertiären Aminoxid handelt es sich bevorzugt um NMMO. Die Konzentration der Cellulose in der Lösung beträgt zweckmäßigerweise 2 bis 19 Gew.-%.

In der Fig. 1 ist erkennbar, dass nach bevorzugter Ausführungsform zwischen der Düsenplatte 10 der Spinnerette 1 und der Kühlkammer 2 eine Monomerabsaugungseinrichtung 11 angeordnet ist, mit der beim Spinnprozess auftretende störende Gase aus der Anlage entfernt werden können. Die Absaugung erfolgt hier zweckmäßigerweise mit der Maßgabe, dass störende Turbulenzen zwischen der Düsenplatte 10 und der Monomerabsaugungseinrichtung 11 vermieden werden.

Die Kühlkammer 2 ist im Ausführungsbeispiel in zwei Kühlabschnitte 2a und 2b unterteilt. Neben der Kühlkammer 2 ist eine Luftzufuhrkabine 8 angeordnet, die in einen oberen Kabinenabschnitt 8a und in einen unteren Kabinenabschnitt 8b unterteilt ist. Aus den beiden Kabinenabschnitten 8a, 8b ist zweckmäßigerweise jeweils Prozessluft (Kühlluft) mit unterschiedlichem konvektivem Wärmeabführvermögen zuführbar. Vorzugsweise ist aus den beiden Kabinenabschnitten 8a, 8b Prozessluft unterschiedlicher Temperatur zuführbar. Zweckmäßigerweise gelangt aus dem oberen Kabinenabschnitt 8a Prozessluft mit einer Temperatur zwischen 18 °C und 80 °C in die Kühlkammer 2 bzw. in den ersten oberen Kühlabschnitt 2a. Vorzugsweise gelangt aus dem unteren Kabinenabschnitt 8b Prozessluft mit einer Temperatur zwischen 18 °C und 35 °C in die Kühlkammer 2 bzw. in den zweiten unteren Kühlabschnitt 2b. Nach besonders bevorzugter Ausführungsform der Erfindung hat die aus dem oberen Kabinenabschnitt 8a austretende Prozessluft eine höhere Temperatur als die aus dem unteren Kabinenabschnitt 8b austretende Prozessluft. Gemäß einer anderen Ausführungsform kann zur Einstellung besonderer Verhältnisse aber auch die aus dem oberen Kabinenabschnitt 8a austretende Prozessluft eine niedrigere Temperatur haben als die aus dem unteren Kabinenabschnitt 8b austretende Prozessluft. Zweckmäßigerweise ist an die Kabinenabschnitte 8a, 8b jeweils ein Gebläse 9a, 9b zur Zuführung von Prozessluft angeschlossen. Es liegt weiterhin im Rahmen der Erfindung, dass die Mengen bzw. die Volumenströme der den Kühlabschnitten 2a, 2b zugeführten Luft unterschiedlich sind und vorzugsweise regelbar sind. Es liegt fernerhin im Rahmen der Erfindung, dass die Temperatur der jeweils den Kühlabschnitten 2a, 2b zugeführten Prozessluft regelbar ist.

In der Fig. 1 wurde angedeutet, dass der Zwischenkanal 3 vom Austritt der Kühlkammer 2 zum Eintritt des Unterziehkanals 5 im Vertikalschnitt keilförmig zusammenläuft und zwar zweckmäßigerweise und im Ausführungsbeispiel auf die Eintrittsbreite des Unterziehkanals 5. Vorzugsweise sind unterschiedliche Steigungswinkel des Zwischenkanals 3 einstellbar. Nach empfohlener Ausführungsvariante läuft der Unterziehkanal 5 zur Verlegeeinheit 6 hin im Vertikalschnitt keilförmig zusammen. Zweckmäßigerweise ist die Kanalweite des Unterziehkanals einstellbar. Nach der aerodynamischen Verstreckung in der Verstreckeinheit 4 (Unterziehkanal 5) treten die Filamente in die Verlegeeinheit 6 ein.

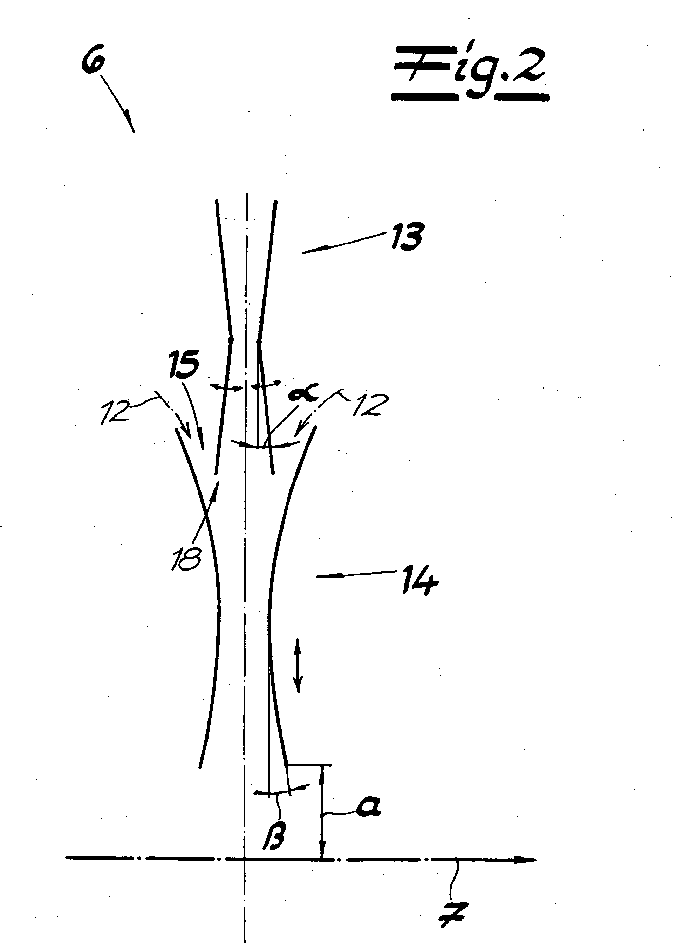

Vorzugsweise und im Ausführungsbeispiel (siehe insbesondere Fig. 2) besteht die Verlegeeinheit 6 aus einem ersten Diffusor 13 und einem daran anschließenden zweiten Diffusor 14. Zwischen dem ersten Diffusor 13 und dem zweiten Diffusor 14 ist ein Umgebungslufteintrittsspalt 15 vorgesehen. Vorzugsweise und im Ausführungsbeispiel werden die durch die Verlegeeinheit 6 tretenden Filamente durch den Umgebungslufteintrittsspalt 15 mit der Maßgabe behandelt, dass eine Koagulation der Cellulose stattfindet. Das wird in den Figuren durch die Pfeile 12 angedeutet. Zweckmäßigerweise wird ein wässriges Medium durch den Umgebungslufteintrittsspalt 15 zur Koagulation der Cellulose eingedüst. Dazu sind vorzugsweise nicht näher dargestellte Sprühköpfe im Bereich des Umgebungslufteintrittsspaltes 15 vorhanden. Gemäß einer Ausführungsform der Erfindung können die Koagulation fördernde Substanzen auch durch entsprechende Öffnungen in den Wänden des Diffusors 14 eingedüst werden. Das ist in den Figuren nicht dargestellt. Zweckmäßigerweise wird auch hier ein wässriges Medium zur Koagulation der Cellulose eingedüst.

Die Fig. 2 zeigt, dass jeder Diffusor 13, 14 ein oberes konvergierendes Teil sowie ein unteres divergierendes Teil aufweist. Folglich hat jeder Diffusor 13, 14 eine engste Stelle zwischen dem oberen konvergierenden Teil und dem unteren divergierenden Teil. Im ersten Diffusor 13 kommt es zu einer Reduzierung der zur Verstreckung der Filamente notwendigen hohen Luftgeschwindigkeiten am Ende der Verstreckeinheit 4. Dadurch resultiert ein deutlicher Druckrückgewinn. Der erste Diffusor 13 weist einen divergierenden Bereich 18 auf, dessen Seitenwände 16, 17 klappenartig verstellbar sind. Auf diese Weise kann ein Öffnungswinkel α des divergierenden Bereiches 18 eingestellt werden. Zu Beginn des zweiten Diffusors 14 kann durch den Umgebungseintrittsspalt 15 Sekundärluft nach dem Injektorprinzip angesaugt werden. Die Weite des Umgebungslufteintrittsspaltes 15 ist zweckmäßigerweise einstellbar. Vorzugsweise ist auch der Öffnungswinkel β des zweiten Diffusors 14 stufenlos verstellbar. Es empfiehlt sich außerdem, dass der zweite Diffusor 14 höhenverstellbar eingerichtet ist, so dass der Abstand a des zweiten Diffusors 14 zum Ablagesiebband 7 eingestellt werden kann. Grundsätzlich sind alle die beiden Diffusoren 13, 14 und ihre Einstellmöglichkeiten betreffenden Merkmale, die zum Reicofil IV-Verfahren in EP 1 340 843 A1 beschrieben sind, auch bei der hier beanspruchten erfindungsgemäßen Vorrichtung verwirklichbar.

Nach einer bevorzugten Ausführungsform der Erfindung ist das Aggregat aus Kühlkammer 2, Zwischenkanal 3, Unterziehkanal 5 und Verlegeeinheit 6, abgesehen von der Luftzuführung in der Kühlkammer 2 und dem Lufteintritt am Umgebungslufteintrittsspalt 15 als geschlossenes System ausgebildet. Das bedeutet, dass zweckmäßigerweise ansonsten keine Luftzufuhr von außen in dieses Aggregat und insbesondere nicht zwischen Kühlkammer 2 und Zwischenkanal 3 sowie nicht zwischen Zwischenkanal 3 und Unterziehkanal 5 stattfindet.

Die aus der Verlegeeinheit 6 austretenden Filamente werden zur Vliesbahn auf dem Ablagesiebband 7 abgelegt. Unter diesem luft- und wasserdurchlässigen Ablagesiebband 7 befindet sich vorzugsweise und im Ausführungsbeispiel eine Absaugvorrichtung 19, die Luft und Waschflüssigkeit von unten durch das Ablagesiebband 7 saugt. Die auf dem Ablagesiebband 7 abgelegte Vliesbahn wird anschließend durch eine Waschstation 16 geführt, in der die Vliesbahn mit einem wässrigen Medium gewaschen wird. Bei diesem wässrigen Medium handelt es sich vorzugsweise um Wasser und/oder um eine wässrige NMMO-Lösung bzw. um ein Gemisch von Wasser und NMMO. Daraufhin wird die Vliesbahn durch eine Entwässerungsstation 17 geführt, in der eine Entwässerung der Vliesbahn stattfindet. Die Entwässerung kann durch Vakuumbehandlung und/oder durch Quetschen in einem Quetschwerk stattfinden. Es liegt im Rahmen der Erfindung, dass die Vliesbahn danach erneut in einer weiteren Waschstation 16 gewaschen und danach in einer weiteren Entwässerungsstation 17 entwässert wird, wobei sich dieser Vorgang (Waschen und Entwässern) vorzugsweise zumindest dreimal wiederholt. Danach wird die Vliesbahn zweckmäßigerweise getrocknet und gemäß einer bevorzugten Ausführungsform aufgewickelt.

## Patentansprüche

1. Verfahren zur Herstellung eines Spinnvlieses aus cellulosischen Filamenten, wobei die Filamente aus einer Cellulose-Lösung mittels einer Spinnerette (1) ersponnen werden,
wobei die cellulosischen Filamente anschließend in eine Kühlkammer (2) aus zumindest zwei Kühlabschnitten (2a, 2b) eingeführt werden,
wobei die Filamente in den beiden Kühlabschnitten (2a, 2b) jeweils mit Prozess- bzw. Kühlluft unterschiedlicher Menge und/oder unterschiedlicher Temperatur und/oder unterschiedlicher Luftfeuchtigkeit beaufschlagt werden,
wobei die Filamente nach der Kühlung in der Kühlkammer (2) aerodynamisch verstreckt werden,
wobei die Filamente in einer der Kühlkammer (2) nachgeschalteten Verstreckeinheit (4) aerodynamisch verstreckt und auf einer Ablagevorrichtung abgelegt werden,
wobei zwischen der Verstreckeinheit (4) und einer Ablagevorrichtung eine Verlegeeinheit (6) mit zumindest einem Diffusor (13, 14) angeordnet ist und
wobei ein wässriges Medium für die Koagulation der Filamente über Öffnungen in der Diffusorwand eingebracht wird.

2. Verfahren zur Herstellung eines Spinnvlieses aus cellulosischen Filamenten, wobei die Filamente aus einer Cellulose-Lösung mittels einer Spinnerette (1) ersponnen werden,
wobei die cellulosischen Filamente anschließend in eine Kühlkammer (2) aus zumindest zwei Kühlabschnitten (2a, 2b) eingeführt werden,
wobei die Filamente in den beiden Kühlabschnitten (2a, 2b) jeweils mit Prozess- bzw. Kühlluft unterschiedlicher Menge und/oder unterschiedlicher Temperatur und/oder unterschiedlicher Luftfeuchtigkeit beaufschlagt werden,
wobei die Filamente nach der Kühlung in der Kühlkammer (2) in einer Verstreckeinheit aerodynamisch verstreckt werden und im Anschluss daran durch eine Verlegeeinheit mit einem ersten Diffusor und einem daran anschließenden zweiten Diffusor geführt werden sowie daraufhin auf einer Ablagevorrichtung abgelegt werden,
wobei zwischen dem ersten und dem zweiten Diffusor ein Umgebungslufteintrittsspalt vorgesehen ist und wobei die Filamente über diesen Umgebungslufteintrittsspalt mit der Maßgabe behandelt werden, dass eine Koagulation der Cellulose stattfindet und/oder wobei die Koagulation fördernde Substanzen über Öffnungen in den Diffusorwänden eingebracht werden.

3. Verfahren nach Anspruch 1 oder 2, wobei die Filamente als Lyocell-Filamente ersponnen werden.

4. Verfahren nach einem der Ansprüche 1 bis 3, wobei als Cellulose-Lösung eine Lösung von Cellulose in einem Gemisch aus Wasser und einem tertiären Aminoxid eingesetzt wird.

5. Verfahren nach einem der Ansprüche 1 bis 4, wobei die Konzentration der Cellulose in der Cellulose-Lösung 0,5 bis 25 Gew.-%, vorzugsweise 1 bis 22 Gew.-% beträgt.

6. Verfahren nach einem der Ansprüche 1 bis 5, wobei das Verhältnis der dem ersten Kühlabschnitt (2a) zugeführten Luftmenge zu der dem zweiten Kühlabschnitt (2b) zugeführten Luftmenge 1:10 bis 1:1, vorzugsweise 1,5:10 bis 6:10 und bevorzugt 1,5:10 bis 4,5:10 beträgt.

7. Verfahren nach einem der Ansprüche 1 bis 6, wobei die Temperatur der dem ersten Kühlabschnitt (2a) zugeführten Kühlluft 18 bis 80 °C und die Temperatur der dem zweiten Kühlabschnitt (2b) zugeführten Kühlluft 18 bis 35 °C beträgt.

8. Verfahren nach einem der Ansprüche 1 bis 6, wobei die Filamente vor der Ablage auf der Ablagevorrichtung mit der Maßgabe behandelt werden, dass eine Koagulation der Cellulose stattfindet.

9. Verfahren nach einem der Ansprüche 1 bis 7, wobei nach der Ablage der Filamente die gebildete Vliesbahn mit einem wässrigen Medium behandelt bzw. gewaschen wird und anschließend entwässert wird.

10. Vorrichtung zur Durchführung des Verfahrens nach einem der Ansprüche 1 bis 9, - mit einer Spinnerette (1), einer Kühlkammer (2), einer Verstreckeinheit (4) und einer Ablagevorrichtung, wobei mit der Spinnerette (1) Filamente aus einer Cellulose-Lösung erspinnbar sind,
wobei die Kühlkammer (2) in zumindest zwei Kühlabschnitte (2a, 2b) unterteilt ist, in denen die Filamente jeweils mit Prozess- bzw. Kühlluft unterschiedlicher Menge und/oder unterschiedlicher Temperatur und/oder unterschiedlicher Luftfeuchtigkeit beaufschlagbar sind,
wobei zwischen der Verstreckeinheit (4) und einer Ablagevorrichtung eine Verlegeeinheit (6) mit zumindest einem Diffusor (13, 14) angeordnet ist und
wobei ein wässriges Medium für die Koagulation der Filamente über Öffnungen in der Diffusorwand einbringbar ist.

11. Vorrichtung zur Durchführung des Verfahrens nach einem der Ansprüche 1 bis 9, - mit einer Spinnerette (1), einer Kühlkammer (2), einer Verstreckeinheit (4) und einer Ablagevorrichtung, wobei mit der Spinnerette (1) Filamente aus einer Cellulose-Lösung erspinnbar sind,
wobei die Kühlkammer (2) in zumindest zwei Kühlabschnitte (2a, 2b) unterteilt ist, in denen die Filamente jeweils mit Prozess- bzw. Kühlluft unterschiedlicher Menge und/oder unterschiedlicher Temperatur und/oder unterschiedlicher Luftfeuchtigkeit beaufschlagbar sind,
wobei die Verlegeeinheit aus einem ersten Diffusor und einem daran anschließenden zweiten Diffusor besteht, wobei zwischen dem ersten und dem zweiten Diffusor ein Umgebungslufteintrittsspalt vorgesehen ist, wobei über diesen Umgebungslufteintrittsspalt die Filamente mit der Maßgabe behandelt werden, dass eine Koagulation der Cellulose stattfindet.

12. Vorrichtung nach Anspruch 10 oder 11, wobei die Spinnerette (1) eine Lochdichte von 0,5 bis 9 Loch/cm², vorzugsweise von 1 bis 8 Loch/cm² und bevorzugt von 1,5 bis 7,5 Loch/cm² aufweist.

13. Vorrichtung nach einem der Ansprüche 10 oder 11, wobei die Verbindung zwischen der Kühlkammer und der Verstreckeinheit (4) nach außen geschlossen bzw. nach außen luftzuführungsfrei ausgebildet ist.

## Claims

1. A method for the manufacture of a spunbonded fabric from cellulose filaments, wherein
the filaments are spun from a cellulose solution by means of a spinneret (1), wherein
the cellulose filaments are subsequently introduced into a cooling chamber (2) comprising at least two cooling sections (2a, 2b), wherein the filaments in the two cooling sections (2a, 2b) are in each case impinged upon by differing quantities of process air, i.e. cooling air, at differing temperatures and/or differing air humidities, wherein.
after cooling in the cooling chamber (2) the filaments are aerodynamically stretched, wherein
the filaments are aerodynamically stretched in a stretching unit (4) downstream of the cooling chamber (2) and are deposited on a deposition device, wherein
a laying unit (6) with at least one diffuser (13, 14) is arranged between the stretching unit (4) and a deposition device, and wherein
an aqueous medium for the coagulation of the filaments is introduced via openings in the diffuser wall.

2. A method for the manufacture of a spunbonded fabric from cellulose filaments, wherein
the filaments are spun from a cellulose solution by means of a spinneret (1), wherein
the cellulose filaments are subsequently introduced into a cooling chamber (2) comprising at least two cooling sections (2a, 2b), wherein the filaments in the two cooling sections (2a, 2b) are in each case impinged upon by differing quantities of process air, i.e. cooling air, at differing temperatures and/or differing air humidities, wherein
after the cooling in the cooling chamber (2) the filaments are aerodynamically stretched in a stretching unit. and are subsequently fed through a laying unit with a first diffuser and a subsequent second diffuser, and are then deposited on a deposition device, wherein
an ambient air entry gap is provided between the first and the second diffusers, and wherein
the filaments are treated via this ambient air entry gap, with the stipulation that a coagulation of the cellulose takes place, and/or wherein
the substances promoting the coagulation are introduced via openings in the diffuser walls.

3. The method in accordance with Claim 1 or 2, wherein the filaments are spun as lyocell filaments.

4. The method in accordance with one of the Claims 1 to 3, wherein a solution of cellulose in a mixture of water and a tertiary amine oxide is deployed as the cellulose solution.

5. The method in accordance with one of the Claims 1 to 4, wherein the concentration of the cellulose in the cellulose solution is 0.5 to 25% by weight, preferentially 1 to 22% by weight.

6. The method in accordance with one of the Claims 1 to 5, wherein the ratio of the quantity of air supplied to the first cooling section (2a) to the quantity of air supplied to the second cooling section (2b) is 1:10 to 1:1, preferentially 1.5:10 to 6:10, and preferably 1.5:10 to 4.5:10.

7. The method in accordance with one of the Claims 1 to 6, wherein the temperature of the cooling air supplied to the first cooling section (2a) is 18 to 80 °C, and the temperature of the cooling air supplied to the second cooling section (2b) is 18 to 35 °C.

8. The method in accordance with one of the Claims 1 to 6, wherein before the deposition onto the deposition device the filaments are treated with the stipulation that a coagulation of the cellulose takes place.

9. The method in accordance with one of the Claims 1 to 7, wherein after the deposition of the filaments the fabric web formed is treated, i.e. washed, with an aqueous medium, and is subsequently drained.

10. A device for the execution of the method in accordance with one of the Claims 1 to 9, - with a spinneret (1), a cooling chamber (2), a stretching unit (4) and a deposition device, wherein filaments can be spun from a cellulose solution with the spinneret (1), wherein
the cooling chamber (2) is subdivided into at least two cooling sections (2a, 2b), in each of which the filaments can be impinged upon by differing quantities of process air, i.e. cooling air, at differing temperatures and/or differing air humidities, wherein
a laying unit (6) with at least one diffuser (13, 14) is arranged between the stretching unit (4) and a deposition device, and wherein
an aqueous medium for the coagulation of the filaments can be introduced via openings in the diffuser wall.

11. A device for the execution of the method in accordance with one of the Claims 1 to 9, - with a spinneret (1), a cooling chamber (2), a stretching unit (4) and a deposition device, wherein filaments can be spun from a cellulose solution with the spinneret (1), wherein
the cooling chamber (2) is subdivided into at least two cooling sections (2a, 2b), in each of which the filaments can be impinged upon by differing quantities of process air, i.e. cooling air, at differing temperatures and/or differing air humidities, wherein
the deposition unit consists of a first diffuser and a subsequent second diffuser, wherein
an ambient air entry gap is provided between the first and the second diffusers, wherein
the filaments are treated via this ambient air entry gap with the stipulation that a coagulation of the cellulose takes place.

12. The device in accordance with Claim 10 or 11, wherein the spinneret (1) has a hole density of 0.5 to 9 holes/cm², preferentially 1 to 8 holes/cm², and preferably 1.5 to 7.5 holes/cm².

13. The device according to one of the Claims 10 or 11, wherein the connection between the cooling chamber and the stretching unit (4) is designed to be closed externally, i.e. is free of any external air supply.

## Revendications

1. Procédé de fabrication d'un non-tissé en filaments cellulosiques, les filaments étant filés à partir d'une solution de cellulose au moyen d'une fileuse (1),
les filaments cellulosiques étant ensuite introduits dans une cellule réfrigérante (2) composée d'au moins deux sections réfrigérantes (2a, 2b),
les filaments étant respectivement sollicités dans les deux sections réfrigérantes (2a, 2b) avec de l'air de traitement ou de l'air réfrigérant en quantité différente et/ou à température différente et/ou ayant une hygrométrie différente,
les filaments étant, après refroidissement dans la cellule réfrigérante (2), étirés aérodynamiquement,
les filaments étant étirés aérodynamiquement dans une unité d'étirage (4) installée en aval de la cellule réfrigérante (2) et déposés sur un dispositif de dépôt,
une unité de pose (6) équipée d'au moins un diffuseur (13, 14) étant disposée entre l'unité d'étirage (4) et un dispositif de dépôt et
un fluide aqueux étant introduit par des orifices de la paroi de diffusion pour la coagulation des filaments.

2. Procédé de fabrication d'un non-tissé en filaments cellulosiques, les filaments étant filés à partir d'une solution de cellulose au moyen d'une fileuse (1),
les filaments cellulosiques étant ensuite introduits dans une cellule réfrigérante (2) composée d'au moins deux sections réfrigérantes (2a, 2b),
les filaments étant respectivement sollicités dans les deux sections réfrigérantes (2a, 2b) avec de l'air de traitement ou de l'air réfrigérant en quantité différente et/ou à température différente et/ou ayant une hygrométrie différente,
les filaments étant, après refroidissement dans la cellule réfrigérante (2), étirés aérodynamiquement dans une unité d'étirage, étant ensuite conduits dans une unité de pose équipée d'au moins un premier diffuseur et d'un second diffuseur consécutif puis étant disposés sur un dispositif de dépôt,
étant prévu entre le premier et le second diffuseur un interstice d'entrée d'air ambiant et les filaments étant traités via cet interstice d'entrée d'air ambiant de manière à ce qu'il se produise une coagulation de la cellulose et/ou que des substances favorisant la coagulation soient introduites par des orifices des parois de diffusion.

3. Procédé selon la revendication 1 ou 2, les filaments étant filés en tant que filaments de Lyocell.

4. Procédé selon une des revendications 1 à 3, une solution de cellulose étant utilisée, en un mélange d'eau et d'un aminoxyde tertiaire, comme solution de cellulose.

5. Procédé selon une des revendications 1 à 4, la concentration de cellulose dans la solution de cellulose s'élevant à 0,5 à 0,25 % en poids, de préférence 1 à 22 % en poids.

6. Procédé selon une des revendications 1 à 5, le rapport entre la quantité d'air acheminée à une section réfrigérante (2a) et la quantité d'air acheminée à la seconde section réfrigérante (2b) étant de 1:10 à 1:1, de préférence 1,5:10 à 6:10 et de préférence de 1,5:10 à 4,5:10.

7. Procédé selon une des revendications 1 à 6, la température de l'air réfrigérant acheminé à la première section réfrigérante (2a) s'élevant à 18 à 80 °C et la température de l'air réfrigérant acheminé à la seconde section réfrigérante (2b) s'élevant à 18 à 35 °C.

8. Procédé selon une des revendications 1 à 6, les filaments étant traités avant dépôt sur le dispositif de dépôt en veillant à ce qu'une coagulation de la cellulose ait lieu.

9. Procédé selon une des revendications 1 à 7, la bande de non-tissé formée étant, après dépôt des filaments, traitée avec un fluide aqueux ou lavée puis déshydratée.

10. Dispositif de réalisation du procédé selon une des revendications 1 à 9, comportant une fileuse (1), une cellule réfrigérante (2), une unité d'étirage (4) et un dispositif de dépôt, des filaments de solution de cellulose pouvant être filés à l'aide de la fileuse (1),
la cellule réfrigérante (2) étant divisée en au moins deux sections réfrigérantes (2a, 2b) dans lesquelles les filaments sont respectivement sollicités avec de l'air de traitement ou de l'air réfrigérant en quantité différente et/ou à température différente et/ou ayant une hygrométrie différente,
une unité de pose (6) comprenant au moins un diffuseur (13, 14) étant disposée entre l'unité d'étirage (4) et un dispositif de dépôt,
un fluide aqueux pouvant être introduit par des orifices dans la paroi du diffuseur par des orifices.

11. Dispositif de réalisation du procédé selon une des revendications 1 à 9, comportant une fileuse (1), une cellule réfrigérante (2), une unité d'étirage (4) et un dispositif de dépôt, des filaments de solution de cellulose pouvant être filés à l'aide de la fileuse (1),
la cellule réfrigérante (2) étant divisée en au moins deux sections réfrigérantes (2a, 2b) dans lesquelles les filaments sont respectivement sollicités avec de l'air de traitement ou de l'air réfrigérant en quantité différente et/ou à température différente et/ou ayant une hygrométrie différente,
l'unité de pose (6) étant composée d'un premier diffuseur et d'un second diffuseur consécutif, étant prévu entre l'unité d'étirage (4) et un dispositif de dépôt (6) un interstice d'entrée d'air ambiant, les filaments étant traités via cet interstice d'entrée d'air ambiant en veillant à ce qu'une coagulation de la cellulose ait lieu.

12. Dispositif selon la revendication 10 ou 11, la fileuse (1) présentant une densité de perforation de 0,5 à 9 trous/cm², de préférence de 1 à 8 trous/cm² et préférentiellement de 1,5 à 7,5 trous/cm².

13. Dispositif selon une des revendications 10 ou 11, la liaison entre la chambre réfrigérante et l'unité d'étirage (4) étant réalisée fermée vers l'extérieur ou sans acheminement d'air vers l'extérieur.
